# EUROPEAN PATENT APPLICATION

(11) **EP 1 930 747 A1**
(43) Date of publication of application: **11.06.2008**
(21) Application number: 06783038.0
(22) Date of filing: 25.08.2006
(51) Int. Cl.: G02B 5/18, G02B 6/12, G02B 6/122, G02B 6/13

(54) **OPTICAL DEVICE AND METHOD FOR MANUFACTURING SAME**

(30) Priority: 01.09.2005 JP 2005253847
(71) Applicant: Sumitomo Electric Industries, Ltd., Osaka-shi, Osaka 541-0041 (JP)
(72) Inventor: AKAHANE, Yoshihiro, Hyogo 664-8611 (JP); ODA, Kazuhiko, Hyogo 664-8611 (JP); MATSUURA, Takashi, Hyogo 664-8611 (JP); USHIRO, Toshihiko, Hyogo 664-8611 (JP); IMAI, Takahiro, Hyogo 664-8611 (JP)
(74) Representative: HOFFMANN EITLE
(86) International application number: PCT/JP2006/316698
(87) International publication number: WO 2007/029522

(57) **Abstract**

An optical device includes a transparent thin film containing silicon, oxygen, carbon and hydrogen as main components, wherein the film includes local regions of a relatively high refractive index and local regions of a relatively low refractive index.

## Description

### Technical Field

The present invention relates to an optical device for use in various optical fields such as information communication, information recording, image pickup, and image display, and more particularly relates to such an optical device utilizing a light-transmitting thin film.

### Background Art

Various optical thin films are used so as to control light in the optical fields such as information communication, information recording, image pickup, and image display. Oxide thin films such as SiO₂ and TiO₂ and fluoride films such as MgF₂ are used as typical optical thin-film materials, and these are utilized for antireflection films, mirrors, and filters. Moreover, diffractive optical elements to which optical thin films are applied are used for various applications.

The diffractive optical elements are mainly classified into a relief type and a refractive-index-modulated type. The relief type of diffractive optical element is formed by alternately arranging local regions of a relatively large thickness and local regions of a relatively small thickness. That is, a diffraction phenomenon appears due to a phase difference in light rays which is caused by a difference in light paths between a light ray passing through a medium of a convex portion corresponding to the local region of the relatively large thickness and a light ray passing through the air in a concave portion corresponding to the local region of the relatively small thickness. The relief type of diffractive optical element can be formed by performing processes such as photolithography and etching on a surface of an optically transparent material such as quartz.

The refractive-index-modulated type of diffractive optical element is formed by alternately arranging local regions of a relatively large refractive index and local regions of a relatively small refractive index. Then, a diffraction phenomenon appears due to a phase difference caused by a difference in light paths between light rays that respectively pass through the local regions having different refractive indexes. The refractive-index-modulated type of diffractive optical element can be formed by irradiating a material such as a Ge-doped silica glass or a photopolymer with an energy beam such as ultraviolet rays or visible rays so as to modulate the refractive index of the material. Recently, a refractive-index-modulated type of diffractive optical element utilizing a transparent carbon film has been proposed as disclosed in Patent Document 1 of Japanese Patent Laying-Open No. 2004-163892.
Patent Document 1: Japanese Patent Laying-Open No. 2004-163892

### Disclosure of the Invention

### Problems to be Solved by the Invention

In comparison with the relief type of diffractive optical element that requires fine concave/convex portions to be formed, the refractive-index-modulated type of diffractive optical element has advantages in that the manufacturing process thereof is relatively simple and the surface thereof is flat so that contaminants hardly adhere thereto. However, it is difficult to greatly change the refractive index of conventional optical materials, and for example, SiO₂ has a possible change Δn in refractive index as small as 0.001, and photopolymers also have a possible change Δn as small as 0.004. The change Δn in refractive index in a refractive-index-modulated type of diffractive optical element directly gives influence on the diffraction efficiency. That is, the diffraction efficiency can be enhanced when the possible change Δn is greater. In comparison with the relief type of diffractive optical element, therefore, the refractive-index-modulated type of diffractive optical element is greatly limited in designing thereof in the case of using an optical material having a small value of possible change Δn.

In this respect, Patent Document 1 discloses a carbon film in which Δn can be increased up to 0.5, thereby enhancing flexibility in designing the optical device. However, the carbon film has a problem that it is easily colored in light of the visible light range.

Therefore, an object of the present invention is to provide a refractive-index-modulated type of diffractive optical element having a great change Δn in refractive index (i.e., high diffraction efficiency) and high transparency as well.

### Means for Solving the Problems

An optical device according to the present invention includes a transparent thin film containing silicon, oxygen, carbon and hydrogen as main components, wherein the film includes local regions of a relatively high refractive index and local regions of a relatively low refractive index.

In the transparent thin film of the optical device, it is preferable that an atomic % ratio of C/Si is more than 1.0 and less than 13.0 and an atomic % ratio of O/Si is more than 0.5 and less than 2.0, with respect to an average composition in the local regions of the relatively high and low refractive indices. Moreover, it is further preferable with respect to the average composition that an atomic % ratio of C/Si is more than 1.0 and less than 2.0, an atomic % ratio of O/Si is more than 0.5 and less than 2.0 and an atomic % ratio of H/C is more than 1.0 and less than 4.0.

The present optical device can be manufactured by applying a corpuscular beam such as an ion beam, an electron beam, or a neutron beam, or electromagnetic waves such as UV rays, X-rays, or gamma rays, to local regions of a thin film which is a starting material containing silicon, oxygen, carbon, and hydrogen as main components, so as to cause refractive index modulation. The present optical device can also be manufactured by using the thin film as the starting material and by irradiating local regions thereof with a corpuscular beam or electromagnetic waves in an atmosphere containing oxygen so as to cause the refractive index modulation.

The starting material preferably has an atomic % ratio of C/Si being more than 1.0 and less than 13.0 and an atomic % ratio of O/Si being more than 0.5 and less than 1.5. It is more preferable that an atomic % ratio of C/Si is more than 1.0 and less than 3.0, an atomic % ratio of O/Si is more than 0.5 and less than 1.5, and an atomic % ratio of H/C is more than 0.8 and less than 4.0.

### Effects of the Invention

Accordance to the present invention, it is possible to provide a refractive-index-modulated type of diffractive optical element having a great change Δn in refractive index (i.e., high diffraction efficiency) and high transparency as well.

### Best Modes for Carrying Out the Invention

In the following, explanation will be given on a starting material for an optical device according to the present invention and a production method thereof, and then given on manufacturing processes of a refractive-index-modulated structure as well as functions and applications of the optical device.

### (1) Starting Material and Production Method thereof

As a starting material for forming an optical device according to the present invention, it is possible to preferably use a transparent thin film containing silicon, oxygen, carbon, and hydrogen as main components, with an atomic % ratio of C/Si being more than 1.0 and less than 13.0 and an atomic % ratio of O/Si being more than 0.5 and less than 1.5. That is, such a thin film has a small extinction coefficient in the visible light range and is preferable as a material for an optical device to be used in the visible light range. Here, the compositions of C, O, Si, etc. can be determined by using XPS (X-ray Photoelectron Spectroscopy), AES (Auger Electron Spectroscopy), RBS (Rutherford Backscattering), or the like.

Such a thin film can be obtained, for example, by a plasma CVD (Chemical Vapor Deposition) method using siloxane having a relatively low molecular weight as a raw material. An SiOₓ film synthesized by using siloxane as a raw material and a silicon oxide film containing carbon are disclosed in Japanese Patent Laying-Open No. 7-333404, Japanese Patent Laying-Open No. 2004-341541, and Japanese Patent Laying-Open No. 8-72193, for example.

Siloxane includes, in its chemical structure, a periodic structure of -Si-O- in its skeleton, with a hydrogen atom or a hydrocarbon-based group being attached to a side chain of a silicon atom. As specific examples of such siloxane, there are polydimethylsiloxane [(CH₃)₂SiO]ₙ, polydiphenylsiloxane [(C₆H₅)₂SiO]ₙ, polymethylphenylsiloxane [(CH₃)(C₆H₅)SiO]ₙ and poly (methyl hydrogen siloxane) [(H)(CH₃)SiO]ₙ.

It is considered that, in the case of synthesis performed using siloxane in a plasma CVD method, unsaturated bonds of carbon atoms which cause coloring hardly form a long chain, thereby making it possible to provide a film having high transparency. It is considered that the synthesized film has a structure close to an amorphous structure, and the film includes therein bonds such as CH₃, CH₂, SiO, and SiH. Moreover, some of the synthesized films contain bonds such as SiC, OH, and CO. It should be noted that hydrogen contained in the synthesized film is preferably in a range of more than 0.7 and less than 4.0 in atomic % ratio of H/C. The content of H can be determined by HFS (Hydrogen Forward Scattering), and by combining this with RBS, ratios of hydrogen to the other elements can also be determined. That is, for example, a thin film to be analyzed is irradiated with helium ions, and then helium ions scattered backward and hydrogen atoms scattered forward are detected by a detector, so that contents of various kinds of constituent elements can be determined.

Moreover, from the viewpoint of transparency of the synthesized film and easiness of modifying optical properties thereof, a preferable case is that the atomic % ratio of C/Si is more than 1.0 and less than 8, the atomic % ratio of O/Si is more than 0.5 and less than 2.0, and the atomic % ratio ofH/C is more than 0.8 and less than 4.0, and a more preferable case is that the atomic % ratio of C/Si is more than 1.0 and less than 3, the atomic % ratio of O/Si is more than 0.5 and less than 1.5, and the atomic % ratio of H/C is more than 0.8 and less than 4.0.

With respect to hardness of the starting thin material film, it is preferable that the film has an indentation hardness in a range of more than 500 N/mm² and less than 10000 N/mm² measured, for example, by Nano-Indenter ENT-1100a manufactured by Elionix Co., Ltd., because in such a case, the film tends to have high durability and transparency. If the hardness is lower than this range, the thin film is liable to be easily scratched and requires careful handling during assembly into a thin-film optical device. If the hardness is higher than this range, on the other hand, the thin film tends to be lowered in transparency and is limited in application to the optical device. It is particularly preferable that the indentation hardness is in a range of more than 2000 N/mm² and less than 5000 N/mm², because in such a case, the optical properties of the thin film can be easily modified by irradiation with an energy beam, which will be described later.

In the case that the thin film has an extinction coefficient k greater than 0.005 as its optical property, coloring of the thin film in visible light is enhanced, and then the thin film is limited in application to the optical device. The refractive index of the thin film is preferably in a range of more than 1.35 and less than 1.80. Although it is possible to optically use the thin film having a refractive index out of this range, the thin film tends to become soft and decrease in durability in the case that the refractive index is less than 1.35. In the case that the refractive index is higher than 1.80, on the other hand, coloring of the thin film in visible light is enhanced. From the viewpoint of less coloring in visible light, the refractive index is preferably less than 1.75, and more preferably less than 1.65.

### (2) Formation of Refractive-Index-Modulated Structure

In the thin film material according to the present invention, it is possible to modify optical properties thereof by applying an energy beam thereto. More specifically, the optical properties of the thin film can be modified by irradiating the thin film with a corpuscular beam such as an ion beam, an electron beam, or a neutron beam, or electromagnetic waves such as UV rays, X-rays, or gamma rays. By utilizing this modifiable feature, it is possible to form a pattern of optical properties in the thin film through application of an energy beam to local regions of the thin film. That is, it is possible to change (modify) the refractive index in a prescribed pattern in the thin film so as to form a waveguide, a diffractive optical element, or the like.

Although detailed mechanisms of changes in the optical properties of the thin film due to irradiation with an energy beam in the present invention have not been clarified, it is considered that upon irradiation with a corpuscular beam such as an electron beam, an ion beam, a neutron beam, or an α-beam, or electromagnetic waves such as UV rays, X-rays, or gamma rays, variations occur in local composition, chemical bonding state, and the like in the thin film, leading to variations in interaction with light and in optical properties in the thin film.

In the optical properties of the thin film of the present invention, the amount of refractive index change Δn can be varied within a range from 0.05 to less than 0.4. For forming a pattern of such a refractive index change, it is possible to apply a known method using at least one of various kinds of masks or interference exposure.

The modified region generally tends to be reduced in hydrogen content, and in some cases, its oxygen content slightly increases through intake of oxygen from the outside. In an actual optical device, it is almost impossible to measure the composition in each fine region, but the average composition can be determined. The average composition is as follows: the atomic % ratio of C/Si is preferably more than 1.0 and less than 13.0, and the atomic % ratio of O/Si is preferably more than 0.5 and less than 2.0. Regarding hydrogen, the atomic % ratio of H/C is preferably in a range of more than 0.4 and less than 4.0.

Moreover, from the viewpoint of transparency and the amount of change in refractive index after the modification, it is preferable that the atomic % ratio of C/Si is more than 1.0 and less than 8, the atomic % ratio of O/Si is more than 0.5 and less than 2.0, and the atomic % ratio ofH/C is more than 0.4 and less than 4.0, and it is more preferable that the atomic % ratio of C/Si is more than 1.0 and less than 3, the atomic % ratio of O/Si is more than 0.5 and less than 2.0, and the atomic % ratio of H/C is more than 0.4 and less than 4.0. It is further preferable that the atomic % ratio of C/Si is more than 1.0 and less than 2.0, the atomic % ratio of O/Si is more than 0.5 and less than 2.0, and the atomic % ratio of H/C is more than 1.0 and less than 4.0.

### (3) Functions and Applications of Optical Device

As described above, by forming a refractive-index-modified structure in the optical thin film of the present invention, it is possible to obtain various optical control functions. More specifically, it is possible to obtain an optical device having a function of combining/branching wavelengths, combining/branching power, combining/branching polarizations, converging light, or shaping a beam.

Since the present optical device is applicable in a wide range covering from the infrared range to the visible light range and near-ultraviolet range, it is applicable to a wider variety of applications. The device is substantially a thin film and is of a refractive-index-modulated type, and thus is suitable for making it smaller and thinner. More specifically, the present device is applicable to various optical devices for optical communication, devices in optical machining apparatuses using laser and the like, optical systems in various image display apparatuses and optical recording apparatuses, optical measuring apparatuses, and the like.

For example, regarding the function of combining/branching wavelengths, the present device is applicable to a filter for combining/branching wavelengths in optical communication, a device for combining/branching RGB lights in an image display apparatus, and the like. Regarding the function of combining/branching power, the present device is applicable to a multi-laser-beam machining apparatus, an optical coupler for optical communication, and the like. Regarding the function of combining/branching polarizations, the present device is applicable to a device for branching TE and TM waves in optical communication, a polarizer, an analyzer, a polarizing plate in a liquid crystal display, and the like. Regarding the function of converging light, the present device is considered applicable to various lenses, a microlens array, and the like for a display apparatus and a recording apparatus. Regarding function of shaping a beam, the present device is applicable to a homogenizer in a machining apparatus or a display apparatus.

### Example 1

An Si-O-C-H film having a thickness of 2 µm was synthesized by introducing hexamethyldisiloxane (CH₃)₃SiOSi(CH₃)₃ up to a pressure of 67 Pa (0.5 Torr) into an evacuated reaction chamber, and applying high-frequency power with a power density of 0.01 w/cm² to a quartz substrate set at a temperature of 80°C. The obtained thin film had an atomic composition ratio of about 2.2:2.3:0.9:1 for C:H:O:Si measured by an RBS/HFS method.

A gold mask was patterned on the thin film by a lift-off method, and the refractive index was modulated by exposure using synchrotron radiation (energy: 50 to 3000 eV), and then the gold mask was removed by etching. In this manner, there was formed a refractive-index-modulated type of diffraction lens having a function of converging visible light.

### Example 2

An Si-O-C-H film having a film thickness of 3 µm was synthesized by introducing hexamethyldisiloxane (CH₃)₃SiOSi(CH₃)₃ up to a pressure of 13 Pa (0.1 Torr) into an evacuated reaction chamber, and applying high-frequency power with a power density of 0.005 w/cm² to a quartz substrate set at a temperature of 80°C.

The obtained thin film was exposed by an interference exposure method with a KrF excimer laser (wavelength: 248 nm) being used as a radiation source, so as to cause a pattern of refractive index modulation therein. In this manner, there was formed a refractive-index-modulated type of diffractive optical element having a function of branching visible light waves.

### Example 3

An Si-O-C-H film having a film thickness of 2 µm was synthesized by introducing hexamethyldisiloxane (CH₃)₃SiOSi(CH₃)₃ up to a pressure of 13 Pa (0.1 Torr) into an evacuated reaction chamber, and applying high-frequency power of 80W per an electrode area of 95 cm² to a quartz substrate set at a temperature of 90°C. When measured by the RBS/HFS method, the obtained thin film had an atomic composition of C = 1.8 × 10²² atoms/cm³, H = 6.5 × 10²² atoms/cm³, O = 1.1 × 10²² atoms/cm³, and Si = 1.2 × 10²² atoms/cm³.

The entire area of the obtained thin film was exposed in the air by using a XeCl excimer laser (wavelength: 308 nm) as a radiation source, so as to modify the refractive index of that entire area. When measured by the RBS/HFS method, the area of the thin film thus exposed had an atomic composition of C = 1.5 × 10²² atoms/cm³, H = 2.4 × 10²² atoms/cm³, O = 1.7 × 10²² atoms/cm³, and Si = 1.3 × 10²² atoms/cm³. From this, it is found that the modified region tends to be lowered in hydrogen content and slightly increase in oxygen content through intake of oxygen from the outside.

Moreover, before and after the refractive index modification of the thin film, measurement of spectroscopic ellipsometry and analysis thereof were carried out in order to evaluate changes in refractive index and extinction coefficient in visible light. As a result, before the refractive index modification, the refractive index was 1.68, and the extinction coefficient was 0.0016. After the refractive index modification, on the other hand, the refractive index was 1.47, and the extinction coefficient was 3.3 × 10⁻⁵. This indicates that the amount of change in refractive index was 0.21 and that coloring in visible light was small in both the case before and after the modification.

In the diffractive optical elements formed in the foregoing Examples, it became possible to achieve high diffraction efficiency that was not obtained in the conventional diffractive optical elements formed by using quartz or a photopolymer.

### Industrial Applicability

As described above, according to the present invention, it is possible to provide a refractive-index-modulated type of diffractive optical element having a great amount of change Δn in refractive index (i.e., high diffraction efficiency) and high transparency.

## Claims

1. An optical device comprising a transparent thin film containing silicon, oxygen, carbon and hydrogen as main components, wherein the film includes local regions of a relatively high refractive index and local regions of a relatively low refractive index.

2. The optical device according to claim 1, wherein said transparent thin film has an atomic % ratio of C/Si being more than 1.0 and less than 13.0 and an atomic % ratio of O/Si being more than 0.5 and less than 2.0 with respect to an average composition in the regions of the relatively high and low refractive indices.

3. The optical device according to claim 1, wherein said film has an atomic % ratio of C/Si being more than 1.0 and less than 2.0, an atomic % ratio of O/Si being more than 0.5 and less than 2.0, and an atomic % ratio of H/C being more than 1.0 and less than 4.0 with respect to an average composition in the regions of the relatively high and low refractive indices.

4. A method for manufacturing the optical device of claim 1, comprising the step of:
applying a corpuscular beam such as an ion beam, an electron beam, or a neutron beam, or electromagnetic waves such as UV rays, X-rays, or gamma rays, to local regions of the thin film containing silicon, oxygen, carbon, and hydrogen as main components, so as to cause refractive index modulation.

5. The method according to claim 4 for manufacturing the optical device, wherein the refractive index modulation is caused in an atmosphere containing oxygen.

6. The method according to claim 4 for manufacturing the optical device, wherein the refractive index modulation is caused in a thin film that contains silicon, oxygen, carbon, and hydrogen as main components and has an atomic % ratio of C/Si being more than 1.0 and less than 13.0 and an atomic % ratio of O/Si being more than 0.5 and less than 1.5.

7. The method according to claim 4 for manufacturing the optical device, wherein the refractive index modulation is caused in a thin film that contains silicon, oxygen, carbon, and hydrogen as main components and has an atomic % ratio of C/Si being more than 1.0 and less than 3.0, an atomic % ratio of O/Si being more than 0.5 and less than 1.5, and an atomic % ratio ofH/C being more than 0.8 and less than 4.0.
